# EUROPÄISCHE PATENTSCHRIFT

(11) **EP 2 792 213 B1**
(45) Veröffentlichungstag und Bekanntmachung des Hinweises auf die Patenterteilung: **08.02.2017**
(21) Anmeldenummer: 12812895.6
(22) Anmeldetag: 07.12.2012
(51) Int. Cl.: H05B 33/08

(54) **SCHALTUNGSANORDNUNG UND VERFAHREN ZUM BETRIEB EINER LED-KETTE AN WECHSELSPANNUNG**
CIRCUIT AND METHOD FOR THE OPERATION OF AN LED STRING SUPPLIED WITH ALTERNATING VOLTAGE
CIRCUIT ET PROCÉDÉ D'OPÉRATION D'UNE CHAÎNE DE DEL ALIMENTÉE PAR UNE TENSION ALTERNATIVE

(30) Priorität: 13.12.2011 DE 102011088407
(43) Veröffentlichungstag der Anmeldung: 22.10.2014
(73) Patentinhaber: OSRAM GmbH, 80807 München (DE)
(72) Erfinder: MAIWALD, Hubert, 93073 Neutraubling (DE); KRAUS, Robert, 93051 Regensburg (DE)
(86) Internationale Anmeldenummer: PCT/EP2012/074753
(87) Internationale Veröffentlichungsnummer: WO 2013/087526

(56) Entgegenhaltungen:
- US-A1- 2009 212 721
- US-A1- 2010 033 113

## Beschreibung

Schaltungsanordnung und Verfahren zum Betrieb einer LED-Kette sowie Beleuchtungsvorrichtung mit einer solchen Schaltungsanordnung und einer LED-Kette.

Die Erfindung betrifft Schaltungsanordnungen zum Betrieb einer aus mindestens einer Leuchtdiode (LED) bestehenden Kette (LED-Kette) an einer Wechselspannung. Die Erfindung betrifft auch Beleuchtungsvorrichtungen mit einer solchen Schaltung. Die Erfindung betrifft ferner ein Verfahren zum Betrieb einer LED-Kette sowie eine Beleuchtungsvorrichtung mit einer solchen Schaltungsanordnung und einer LED-Kette.

Sollen LEDs direkt an einer Wechselspannung vorgegebener Höhe, etwa am Netz, betrieben werden, muss man entweder die Spannung wandeln oder die LED-Kette so auslegen, dass ihre Vorwärtsspannung im Bereich der Versorgungsspannung liegt. Im letzteren Fall stehen, abgesehen von hochfrequent geschalteten Reglern, zwei Varianten zur Verfügung: Die LED-Kette wird entweder über einen (strombegrenzenden) Vorwiderstand unmittelbar ans Netz gelegt (sogenannte AC-LEDs) oder über einen Längsregler versorgt, wobei die gleichgerichtete Spannung vorher mit einem Kondensator geglättet wird.

Bei der ersten Variante ist nachteilig, dass die LEDs mit doppelter Netzfrequenz flackern und in weniger als der halben Zeit Licht abgeben.

Auch die zweite Variante hat ihre spezifischen Nachteile: Die Nachladeströme der Kondensatoren sind im Verhältnis zum Betriebsstrom sehr hoch. Zudem werden Kondensatoren und Gleichrichter beim Einschalten überbeansprucht, da der Einschaltzeitpunkt am Netz nicht definiert ist. Schließlich ist die Verlustleistung im Regler sehr hoch, wenn die Schaltung so ausgelegt ist, dass sie die gesamten Netztoleranzen vertragen soll.

Ein Beispiel für eine Schaltungsanordnung zum Betrieb einer Kette von Leuchtdioden gemäß dem Oberbegriff des Anspruchs 1 ist in der US 2009/212721 A1 gezeigt.

Um die geschilderten Nachteile abzumildern, bedarf es eines nicht unerheblichen Schaltungsaufwandes. Wollte man etwa das Flackern dämpfen, müssen energiespeichernde Bauteile hinzugenommen werden oder für das Auge nicht mehr sichtbare Helligkeitsmodulationen erzeugt werden. Häufig wird daher auf Abhilfemaßnahmen verzichtet und die bestehenden Mängel werden einfach in Kauf genommen.

Es ist die **Aufgabe** der vorliegenden Erfindung, die Nachteile der bekannten Lösungen zu überwinden und insbesondere eine Schaltungsanordnung der eingangs genannten Art anzugeben, die besonders einfach und robust aufgebaut ist, dabei gute Wirkungsgrade erzielt, auch in der kritischen Einschaltphase nur wenig mehr als in der stationären Phase belastet wird, unvermeidliche Netzschwankungen toleriert und/oder nicht zuletzt ein für das Auge flimmerfreies Licht erzeugen kann.

Die Aufgabe wird gelöst durch eine Schaltungsanordnung zum Betrieb einer aus mindestens einer Leuchtdiode bestehenden Kette (LED-Kette) an einer Wechselspannung, aufweisend
- einen Gleichrichter mit einem Kreis ("Eingangskreis") zur Aufnahme der nicht-gleichgerichteten Wechselspannung und einem Kreis ("Ausgangskreis"), in den die gleichgerichtete Wechselspannung abgegeben wird,
- einen im Ausgangskreis liegenden (d.h., dem Gleichrichter nachgeschalteten) Energiespeicher, insbesondere energiespeichernden Kondensator ("Speicherkondensator"), an den die LED-Kette in einer Parallelschaltung angeschlossen werden kann,
- einen Stromregler, der im Betrieb die Aufladung des Speicherkondensators jedes Mal unterbricht, wenn der Strom im Ausgangskreis auf einen bestimmten Maximalwert ("Schwellenstrom") angestiegen ist, und wieder zulässt, wenn die Spannung im Ausgangskreis anschließend auf einen bestimmten Wert ("Schwellenspannung") gefallen ist.

Dabei gilt im vorliegenden Zusammenhang der Ladevorgang dann als unterbrochen, wenn der Strom im Ausgangskreis signifikant abgesenkt ist, also klar unter 10%, bevorzugt unter 5% und besonders bevorzugt unter 2% des Schwellenstroms liegt. Davon abgesehen können die Werte für den Schwellenstrom und/oder die Schwellenspannung fest vorgegeben oder geregelt sein.

Die in dem Eingangskreis angeordneten Elemente der Schaltungsanordnung sind also dem Gleichrichter vorgeschaltet, und die in dem Ausgangskreis angeordneten Elemente der Schaltungsanordnung sind dem Gleichrichter nachgeschaltet.

Die Funktionsweise der vorgeschlagenen Schaltungsanordnung beruht auf dem folgenden Grundprinzip: Der eingesetzte Kondensator dient als Energiespeicher. Er wird bis zum Erreichen eines Schwellenstroms geladen. Während der Ladephase fließt der Strom in den Speicherkondensator und durch die LED-Kette. Ist der Schwellenwert erreicht, wird der Kondensatorladestrom drastisch gesenkt, mit der Folge, dass sich der Kondensator wieder entlädt. In der Entladephase wird die Ladung in die LED-Kette geleitet. Eine Strombegrenzung in dieser Phase kann entfallen, da sich der Strom aus dem - bereits begrenzten - Spitzenstrom in der jeweils vorherigen Ladephase ergibt. Insofern arbeitet der Stromregler genaugenommen als ein Ladebilanzregler.

Ein solches Prinzip bietet eine Reihe von Vorteilen:
- Die Einschaltstromspitze ist verglichen mit der Variante Gleichrichter und Netzkondensator kleiner, in der Höhe unabhängig vom Einschaltzeitpunkt und von definierter Höhe. Deshalb lässt sich die vorgeschlagene Schaltungsanordnung auch in vielen dieser Systeme einsetzen.
- Der Wirkungsgrad ist im Vergleich zu Lösungen mit Gleichrichter und Ladekondensator ebenfalls besser.
- Die innerhalb einer Halbwelle aufgenommene Ladungsmenge ist, wie auch die an die LEDs abgegebene Ladungsmenge, annähernd gleich. Damit bleibt auch der LED-Strom - abgesehen von seiner durch die Ladung und Entladung hervorgerufenen Restwelligkeit - im Wesentlichen konstant.
- Die Stromrestwelligkeit ist relativ klein, somit kann ein störendes Flackern vermieden werden.
- Der Bauelemente-Aufwand ist denkbar gering, insbesondere sind keine Transformatoren bzw. Induktivitäten erforderlich. Dementsprechend können die Schaltungsanordnung und die LED-Kette insbesondere auf einer gemeinsamen Platine untergebracht sein, und zwar insbesondere auf einer Seite, so dass eine bequeme Kühlung ermöglicht wird und man auf diese Weise ein besonders einfach gestaltetes Beleuchtungsmodul erhält.
- Die Anordnung ist sehr tolerant: So könnte die Spannungsfrequenz beispielsweise sowohl 50 Hz als auch 60 Hz betragen, und die Spannungshöhe darf in relativ weiten Grenzen schwanken. Auch relativ große Kapazitätsschwankungen, Betriebstemperaturänderungen und Streuungen in den LED-Kenndaten werden ohne weiteres vertragen und unter Umständen sogar ausgeglichen. Selbst wenn eine der Leuchtdioden ausfallen würde, würde sich dies, jedenfalls von der Spannung her, nicht nachteilig auswirken.

Die Schaltungsanordnung bietet sich insbesondere für eine Versorgungsspannung aus dem Netz an, es können aber auch andere Wechselspannungsquellen verwendet werden. Unabhängig von der Wahl der Spannungsquelle empfiehlt es sich, die Schwellenspannung auf den Nulldurchgang zu legen, aber auch dieser Wert ist nicht zwingend.

Bevorzugt ist die Schaltungsanordnung so dimensioniert, dass für die Vorwärtsspannung (Nennspannung) der LED-Kette Ufges gilt 0,5 Vcc < Ufges < 0,9 Vcc. Insbesondere kann 0,6 Vcc < Ufges < 0,8 Vcc gelten und insbesondere 0,65 Vcc < Vfges < 0,75 Vcc. Dabei gilt Vcc = Umin*1,41 (Umin ist der Minimaleffektivwert der aufgenommenen Wechselspannung und Vcc deren Spitzenwert, für die Nennspannung der LED-Kette gilt Ufges = Uf* N, mit Uf = Nennspannung oder Vorwärtsspannung der einzelnen LEDs und N = Anzahl der LEDs in der Kette). Damit ergibt sich bei einem Umin von 200 V für Ufges ein besonders sinnvoller Bereich zwischen 140 V und 250 V. Dabei ist zu beachten, dass bei kleineren Nennspannungen der Wirkungsgrad sinkt, zugleich aber auch die Empfindlichkeit gegenüber Wechselspannungsänderungen abnimmt; das Umgekehrte gilt bei größeren Nennspannungen.

Vorzugsweise gilt für den Schwellenstrom 1,5 Iled < Ipeak < 4 Iled, wobei Iled für den Nennstrom der einzelnen LEDs und Ipeak für den Schwellenstrom steht. Bei Ipeak-Werten unterhalb 1,5 Iled würde der Kondensator möglicherweise nur unzureichend geladen, bei Ipeak-Werten oberhalb 4 Iled müsste man möglicherweise höhere Verluste und Spitzenströme in Kauf nehmen.

In einer bevorzugten Ausgestaltung besteht der Stromregler aus einem im Ausgangskreis zur aus Speicherkondensator und LED-Kette gebildeten Parallelschaltung in Reihe geschalteten Regelglied, das bei Erreichen des Schwellenstromes von einem niederohmigen Zustand in einen hochohmigen Zustand übergeht und beim Erreichen der Schwellenspannung in den niederohmigen Zustand zurückkehrt.

In einer besonders bevorzugten Ausgestaltung umfasst das Regelglied zwei im Ausgangskreis des Gleichrichters zueinander parallel liegende Zweige, von denen der eine Zweig (erster Zweig) im niederohmigen Zustand des Regelgliedes leitet und im hochohmigen Zustand gesperrt ist und der andere Zweig (zweiter Zweig) im niederohmigen Zustand gesperrt ist und im hochohmigen Zustand leitet. Im einfachsten Fall enthält der erste Zweig einen Schalter (erster Schalter) in Serie zu einem niederohmigen Widerstand und der zweite Zweig einen hochohmigen Widerstand, ebenfalls in Reihe mit einem Schalter. Verwendet man als ersten Schalter etwa einen bipolaren Transistor, passt dazu insbesondere ein Thyristor als zweiter Schalter. Nimmt man dagegen einen MOSFET als ersten Schalter, eignet sich insbesondere ein bipolarer Transistor als zweiter Schalter. Vorzugsweise liegen in der Schalterpaarung Transistor/Thyristor der niederohmige und der hochohmige Widerstand auf der Emitter-Seite des Transistors bzw. in dessen Kollektor-Basis-Kreis und ist das Gate des dem hochohmigen Widerstand nachgeschalteten Thyristors zwischen dem Emitter des Schalttransistors und dem niederohmigen Widerstand auf den ersten Zweig geführt.

Bevorzugt weist der hochohmige Widerstand einen so hohen Widerstandswert auf, dass bei unterbrochener Aufladung des Kondensators höchstens 10% des Nennstroms der LEDs fließen können. Arbeitet man mit der Kombination Transistor/Thyristor, mag der Widerstand insbesondere so bemessen sein, dass er in der Ladephase den Basisstrom für den Schalttransistor bereitstellt und in der Phase der Ladungsunterbrechung dafür sorgt, dass der Haltestrom des Thyristors nicht unterschritten wird. Hieraus ergeben sich Werte, die typischerweise zwischen 5 KΩ und 20 KΩ liegen.

Der niederohmige Widerstand, der über die Relation Rno = Uth/Ipeak (mit Rno als dem Widerstandswert des niederohmigen Widerstandes und Uth als der Thyristorzündspannung) den Schwellenstrom bestimmt, ist vorzugsweise so dimensioniert, dass dieser Stromwert in dem bereits erwähnten Bereich zwischen dem 1,5-Fachen und dem 4-Fachen des LED-Nennstroms liegt.

Der Schalter im ersten Zweig ist insbesondere so ausgelegt, dass er die maximale gleichgerichtete Betriebsspannung und den Schwellenstrom und kurzzeitig auch die sich aus dem Produkt beider Größen ergebende Nennleistung verträgt.

Der Schalter im zweiten Zweig hält insbesondere die maximale gleichgerichtete Betriebsspannung aus; ein Thyristor sollte bevorzugt einen Haltestrom < 0,1 LED-Nennstrom benötigen.

Vorzugsweise liegt die Kapazität des Speicherkondensators zwischen 100 und 1000 µF pro Ampere des LED-Nennstroms, also zwischen 2 und 20 µF bei einem LED-Nennstrom von 20 mA. Große Werte verringern die Restwelligkeit, kleine Werte die Einschaltzeit. Der Speicherkondensator kann ein einfacher Elektrolyt-Kondensator sein, weil er kontrolliert geladen und entladen wird und es nicht auf ein bestimmtes Hochfrequenzverhalten ankommt.

An den Gleichrichter der Schaltungsanordnung werden keine besonderen Anforderungen gestellt. Er muss lediglich für den Schwellenstrom und die Betriebsspannung ausgelegt sein.

Hat der niederohmige Widerstand des Stromreglers einen festen Wert, ist der Schwellenstrom vorzugsweise ebenfalls fest vorgegeben, d. h. wird der LED-Strom indirekt geregelt. Abhängig von der Auslegung der LED-Kette können dann insbesondere entweder der Wirkungsgrad oder die Regelstabilität optimiert werden. Wünscht man eine hohe Regelstabilität bei zugleich hohem Wirkungsgrad, lässt sich die Schaltungsanordnung insbesondere durch Einfügung einer unmittelbaren Regelung des durch die LED-Kette fließenden Stroms weiterbilden.

Auf besonders einfache Weise gelingt eine solche direkte LED-Strom-Regulierung durch Integration folgender Funktionen: Erfassung und Filterung des LED-Stroms, Mitteilung des gefilterten Stromwertes als Ist-Größe an eine Regelstufe und Vergleich der Ist-Größe in dieser Stufe mit einer Soll-Größe zur Bildung einer Stellgröße, die auf einen veränderbaren niederohmigen Widerstand einwirkt, dergestalt, dass der LED-Strom etwa gegenüber Netzspannungschwankungen unempfindlicher wird.

Ist die Schaltungsanordnung mit der erwähnten zusätzlichen Regelschleife versehen, empfiehlt es sich, deren Elemente folgendermaßen zu gestalten und auszulegen:
Zur Stromerfassung wird die Spannung über einem hinter der LED-Kette liegenden ohmschen Widerstand abgegriffen. Dieser Widerstand ist so zu dimensionieren, dass zugleich die Verluste möglichst klein sind und das Signal möglichst groß wird; sein Wert liegt dementsprechend typischerweise im Ohm-Bereich, bevorzugt zwischen 0,5 und 15 Ω.

Stromerfassung und -filterung werden normalerweise, aber nicht zwingend, zu einem Funktionsblock zusammengefasst. Dieser Block muss einen differentiellen Eingang haben, der die hohen auftretenden Spannungen verträgt. Die Filterung sollte die Stromwelligkeit möglichst weitgehend unterdrücken; ihre Tiefpassgrenzfrequenz sollte vorzugsweise kleiner sein als die Frequenz der Wechselspannungsquelle.

Die Regelstufe erhält ihren Sollwert über eine Referenzspannungsquelle. Sie ist vorzugsweise so zu gestalten, dass das System auch in der Einschaltphase nicht schwingt. Für die vorliegenden Zwecke eignet sich besonders ein PI-Regler, der ausreichend genau ist und genügend schnell überträgt.

Das Stellglied kann besonders einfach in eine Ausführung eingepasst werden, bei der der Stromregler ein Regelglied mit einem ersten, aus einem Schalter in Reihe mit einem niederohmigen Widerstand gebildeten Zweig und einem zweiten, aus einem hochohmigen Widerstand in Reihe mit einem weiteren Schalter gebildeten Zweig enthält. In diesem Fall kann man parallel zum niederohmigen Widerstand eine Strecke bestehend aus einem Schalter, vorzugsweise einem MOSFET, in Reihe mit einem weiteren Festwiderstand schalten und die von der Regelstufe abgegebene Stellgröße auf den Schalter einwirken lassen. In dieser Konstellation sollte der niederohmige Widerstand im ersten Zweig des Regelgliedes so beschaffen sein, dass bei minimaler Betriebsspannung und maximaler LED-Kettenspannung der LED-Nennstrom erreicht wird. Der Reihenwiderstand zum Schalter ist vorzugsweise so auszulegen, dass der LED-Nennstrom bei maximaler Betriebsspannung und minimaler LED-Kettenspannung in der Parallelschaltung aus den beiden Widerständen und dem Schalter erreicht wird; der Reihenwiderstand zum Schalter ist üblicherweise mindestens so groß wie der Widerstand im ersten Regelglied-Zweig.

Die Betriebsspannung für die Regelstufe und den vorgeschalteten Funktionsblock und auch die Versorgung der Referenzspannung können bequem per Spitzenwertgleichrichtung am Eingang des Regelgliedes erzeugt werden.

Enthält die Schaltungsanordnung die geschilderte Regelschleife, könnte in diesem Zweig noch ohne großen Zusatzaufwand ein sog. thermisches Derating realisiert werden. Bekanntlich nimmt die Ausfallrate bei Bauelementen mit wachsender Betriebstemperatur zu, und um dem entgegenzuwirken, könnte man beispielsweise einfach den Strom-Sollwert in einer geeigneten Abhängigkeit von der Temperatur absenken.

Die Regelschleife muss übrigens keineswegs zwingend den LED-Strom direkt regeln. Man könnte durchaus auch andere Regelgrößen, insbesondere die - gemittelte - Wechselspannung am Gleichrichter-Eingang, verwenden. Auch in solchen Fällen gelingt es, hohe Wirkungsgrade mit einer guten LED-Strom-Stabilisierung zu verbinden.

Unabhängig davon, ob man eine zusätzliche Regelschleife einbaut oder nicht, lässt sich die Schaltungsanordnung im Rahmen der Erfindung so ausgestalten, dass das abgegebene Licht in bestimmten Grenzen dimmbar wird. Dazu kann man sich in an sich bekannter Weise einer Pulsweitenmodulation, insbesondere einer Phasenanschnittsteuerung, bedienen. Um hier die Blindleistung zu kompensieren, empfiehlt es sich, in den Eingangskreis ein Tiefpassfilter in Form eines R-C-Gliedes einzusetzen, bevorzugt mit Werten in der Größenordnung von 100 Ω bzw. 0,1 µF.

Allgemein kann anstelle eines Kondensators auch jeder andere geeignete Energiespeicher verwendet werden, z.B. ein Akkumulator.

Die Aufgabe wird auch gelöst durch eine Beleuchtungsvorrichtung, bei der eine Schaltungsanordnung der vorgeschlagenen Art mit einer LED-Kette zusammengeschaltet ist. Wie bereits erwähnt, kann diese Vorrichtung wegen der einfachen, platzsparenden Schaltungsanordnung insbesondere mit einer insbesondere vorderseitig bestückten und rückseitig gekühlten Platine sehr kompakt und preiswert gestaltet werden.

Die Aufgabe wird ferner gelöst durch ein Verfahren zum Betrieb einer aus mindestens einer Leuchtdiode bestehenden LED-Kette an einer Wechselspannung, das mindestens die folgenden Schritte enthält:
- Die Wechselspannung wird gleichgerichtet,
- mit der gleichgerichteten Wechselspannung wird ein Kondensator (Speicherkondensator), der im Kreis der gleichgerichteten Wechselspannung (Ausgangskreis) parallel zur LED-Kette liegt, bis zum Erreichen eines bestimmten Maximalstromwertes (Schwellenstrom) aufgeladen und anschließend bis zum Erreichen eines bestimmten Minimalspannungswertes (Schwellenspannung) entladen, wobei im stationären Zustand
- während der Aufladephase Strom sowohl durch den Speicherkondensator als auch durch die LED-Kette fließt und
- in der Entladephase die Ladung des Speicherkondensators in die LED-Kette geleitet wird.

Die Erfindung wird im Folgenden anhand dreier in der Zeichnung dargestellten Ausführungsbeispiele schematisch näher erläutert. Gleiche Bauelemente sind dabei mit gleichen Bezugszeichen versehen. Es zeigen
- Fig.1: das Schaltbild eines ersten Ausführungsbeispiels einer erfindungsgemäßen Beleuchtungsvorrichtung,
- Fig.2: berechnete Strom-, Spannungs- und Leistungskurven nach dem Einschalten der Schaltungsanordnung der Vorrichtung gemäß Fig.1,
- Fig.3: den berechneten Wirkungsgrad der Vorrichtung aus Fig. 1, in Abhängigkeit von der Netzspannung, und zwar für eine unterschiedliche Zahl von LEDs,
- Fig.4: den berechneten LED-Strom in einer Vorrichtung gemäß Fig. 1, ebenfalls als Funktion der Netzspannung und für eine unterschiedliche Anzahl von LEDs,
- Fig. 5: das Schaltbild eines zweiten Ausführungsbeispiels und
- Fig. 6: das Schaltbild eines dritten Ausführungsbeispiels.

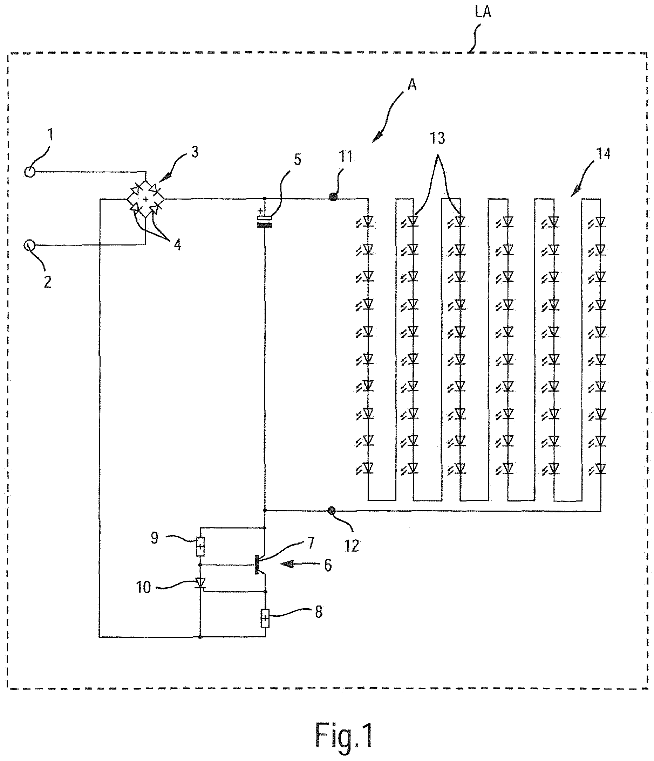

Eine Schaltungsanordnung A einer Beleuchtungsvorrichtung LA aus **Fig.1** weist einen Eingang mit zwei Eingangsanschlüssen 1 und 2 auf, an denen eine Versorgungswechselspannung, im vorliegenden Fall eine Netzspannung mit 230 V, angelegt werden kann. Die aufgenommene Wechselspannung wird in einem Gleichrichter 3 - vorliegend ein aus vier Dioden 4 gebildeter Brückengleichrichter - in eine pulsierende Gleichspannung umgewandelt. Ein Eingangskreis 1, 2 wird hier also durch die zwei Eingangsanschlüsse 1 und 2 gebildet.

Im Kreis der pulsierenden Gleichspannung (Ausgangskreis) liegt ein Speicherkondensator 5 in Form eines Elkos im Bereich von 10 µF in Reihe mit einem Stromregler 6. Der Stromregler 6 enthält zwei im Ausgangskreis zueinander parallele Zweige. Der eine Zweig umfasst als Schalter beispielhaft einen Bipolartransistor 7 sowie einen niederohmigen Widerstand 8 (erster Widerstand) einer Größe im Bereich 10 Ω (niederohmiger Zweig). Der Bipolartransistor 7 ist kollektorseitig mit dem Speicherkondensator 5 und emitterseitig mit dem Widerstand 8 verbunden. Der zweite Zweig enthält - in Serie zueinander liegend - einen hochohmigen Widerstand 9 (zweiter Widerstand) mit einem Widerstandswert im Bereich von 10 KΩ und einen Thyristor 10 (hochohmiger Zweig). Der Widerstand 9 liegt dabei in dem Basis-Kollektorkreis des Bipolartransistors 7, während der Thyristor 10 zwischen der Basis des Bipolartransistors 7 und der vom Bipolartransistor 7 abgewandten Seite des Widerstandes 8 geschaltet ist. Das Thyristor-Gate ist zwischen den Emitter des Bipolartransistors 7 und den Widerstand 8 auf den ersten Zweig geführt. Den Ausgang der Schaltungsanordnung A bilden zwei Ausgangsanschlüsse 11 und 12, die vor bzw. hinter dem Speicherkondensator 5 anliegen.

An diesen Ausgangsanschlüssen 11 und 12 ist eine aus hintereinandergeschalteten einzelnen Leuchtdioden 13 gebildete LED-Kette 14 in der dargestellten Polung angeschlossen. Die einzelnen Leuchtdioden 13 weisen eine Nennspannung von etwa 3,3 V und einen Nennstrom von etwa 20 mA auf. Die gesamte LED-Kette 14 weist eine Vorwärtsspannung von etwa 200 V auf.

Der Ausgangskreis 5-12 wird hier also durch die dem Gleichrichter 3 nachgeschalteten Elemente bis zu und einschließlich der Ausgangsanschlüsse 11 und 12 gebildet.

Die Schaltungsanordnung A arbeitet hier folgendermaßen: Bei Inbetriebnahme ist der Speicherkondensator 5 zunächst leer. Im Laufe der ersten Halbwelle der gleichgerichteten Netzspannung wird der Speicherkondensator 5 so lange geladen, bis der über den Widerstand 8 einstellbare Schwellenstrom erreicht wird. Dann fällt am Widerstand 8 die Zündspannung für den Thyristor 10 (hier: 0,65 V) ab. Damit wird der Thyristor 10 gezündet und der Bipolartransistor 7 gesperrt. Der Strom fließt nun statt durch den niederohmigen Zweig 7, 8 durch den hochohmigen Zweig 9, 10 und ist so gering, dass es zu keiner weiteren Aufladung kommt. Beim nächsten Nulldurchgang der gleichgerichteten Wechselspannung wird der Thyristor 10 wieder gelöscht, d.h. der niederohmige Zweig 7, 8 des Stromreglers 6 durch Schließung des Bipolartransistors 7 wieder leitend; zugleich ist der hochohmige Zweig 9, 10 gesperrt. Damit kann die Aufladung wieder beginnen. Der ganze Vorgang wiederholt sich so lange, bis die Spannung über dem Speicherkondensator 5 in den Bereich der Vorwärtsspannung der LED-Kette 14 (etwa 200 V) kommt. Danach setzt der stationäre, zyklische Betrieb ein. Hierbei fließt dann während des Ladens ein Teil des Stroms in den Speicherkondensator 5, der andere durch die LED-Kette 14, bis wieder der Schwellenstrom erreicht wird. Durch das Abschalten werden zwei Effekte erzielt: Der Strom durch den Speicherkondensator 5 und damit die Stromaufnahme der gesamten Schaltung wird begrenzt. Außerdem ist die in den Speicherkondensator 5 nachgeführte Ladungsmenge immer in etwa gleich, wodurch der Entladungsstrom mehr oder weniger konstant bleibt.

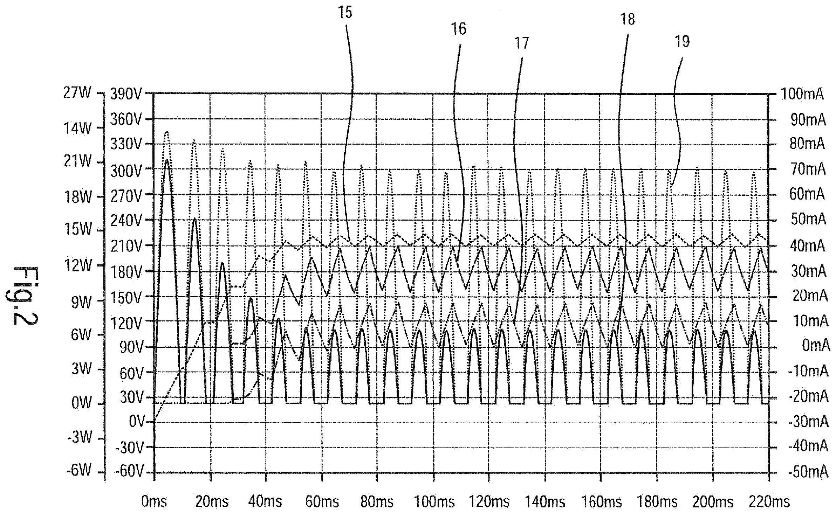

Zur weiteren Verdeutlichung des geschilderten Betriebsverhaltens sind in **Fig.2** charakteristische, an Hand einer Simulation ermittelte Strom-, Spannungs- und Leistungskurven in ihrem zeitlichen Verlauf ab dem Einschaltzeitpunkt dargestellt. In der Grafik zeigen die Kurve 15 den Spannungsanstieg an der LED-Kette 14 nach dem Einschalten, die Kurve 16 den Strom in der LED-Kette 14, die Kurve 17 die von der LED-Kette 14 aufgenommene Leistung, die Kurve 18 die Verluste in dem Stromregler 6 und die Kurve 19 die Gesamtleistungsaufnahme. Man erkennt, dass die Schaltungsanordnung nach dem Einschalten im Verlauf weniger Halbwellen in den stabilen Betrieb übergeht. Die Spannung über der LED-Kette 14 steigt zunächst an, bis sie nach etwa 60 ms ihren vollen Wert erreicht, um den sie dann mit einer sehr geringen Restwelligkeit pendelt (Kurve 15). Wie Kurve 16 zu entnehmen, beginnt der Strom durch die LED-Kette 14 erst ab etwa 30 ms zu fließen und erreicht seinen Nennwert nach der gleichen Zahl von Halbwellen wie die Spannung. Im eingeschwungenen Zustand pendelt der Strom zeitsynchron mit der Spannung um seinen Mittelwert, auf Grund der überlinearen Strom-/Spannungscharakteristik natürlich mit einem relativ größeren Hub, der aber prozentual immer noch deutlich kleiner ist als die Netzspannungsänderung. Die LED-Leistung als das Produkt aus Spannung und Strom der LED-Kette 14 folgt den beiden Kurven 15 und 16, und zwar mit einer durch die Strom-Restwelligkeit geprägten Modulation (Kurve 17). Wie aus Kurve 18 hervorgeht, beginnt die Schaltungsanordnung A mit relativ hohen, insgesamt aber durchaus begrenzten Reglerverlusten, die im Laufe des Einschwingens abnehmen und im stationären Zustand, in dem während etwa der Hälfte der Zeit überhaupt keine Leistung im Regler verbraucht wird, ausgesprochen maßvoll sind. Ein Vergleich mit Kurve 19 zeigt, dass die im Regelglied verbrauchte Leistung im stationären Betrieb nur einen vergleichsweise geringen Anteil an der insgesamt aufgenommenen Leistung hat. Diese Leistung ist im Übrigen in der Einschaltphase kaum höher als in der stationären Phase. Mit der dargestellten Schaltungsanordnung lassen sich Wirkungsgrade bis zu 85% erzielen.

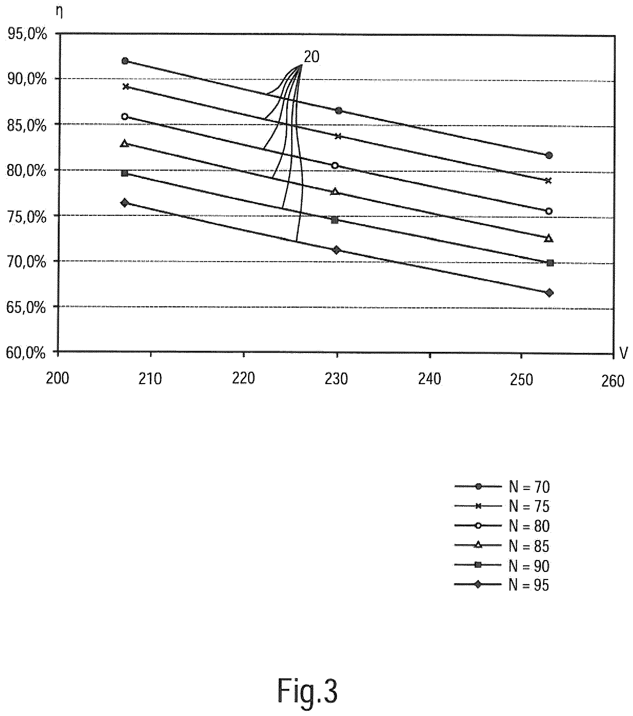

**Fig. 3** illustriert, wie der Wirkungsgrad η im Einzelnen von der Netzspannung V und der Anzahl N der eingesetzten LEDs abhängt. Bei einer bestimmten Zahl von LEDs sinkt er linear mit zunehmender Spannung (Kurven 20). Erhöht man die Zahl der LEDs, die im vorliegenden Rechenbeispiel eine Vorwärtsspannung von 2,9 V haben, von 70 auf 95, nimmt er dagegen zu. So ergibt sich eine Schar aus zueinander parallelen Geraden. Bei einer Netzspannung von 230 V kommt man in dem berechneten Beispiel mit einer Kette aus 92 LEDs auf einen Wirkungsgrad von 85%.

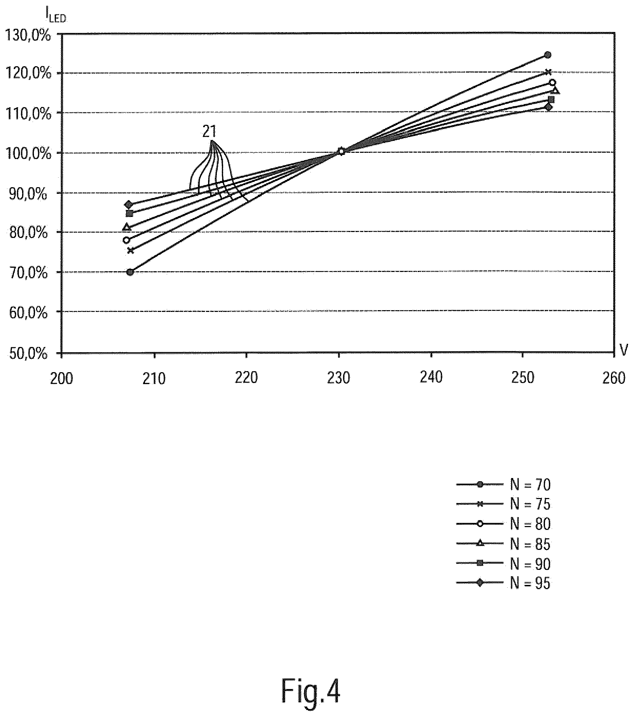

**Fig. 4** zeigt, wiederum für eine unterschiedliche Anzahl an LEDs, wie der Strom I_{LED} - hier dargestellt als Prozentsatz vom LED-Nennstrom - von der Netzspannung abhängt. Man erkennt aus den Kurven 21, dass der Ist-Strom mit wachsender Spannung linear zunimmt, wobei die Geraden mit wachsender LED-Zahl steiler werden; sie schneiden sich bei 230 V. Mit anderen Worten: Macht man - in gewissen Grenzen - die LED-Kette länger, steigt einerseits der Wirkungsgrad; andererseits reagiert der LED-Strom aber auch empfindlicher auf Spannungsschwankungen.

Natürlich hängt die Lichtabgabe der LEDs auch noch von weiteren Größen, etwa der Betriebstemperatur, ab. Diese Abhängigkeit ist im vorliegenden Fall aber reduziert, weil andere Bauelemente wie der Bipolartransistor 7 eine kompensierende Temperatur-Drift haben.

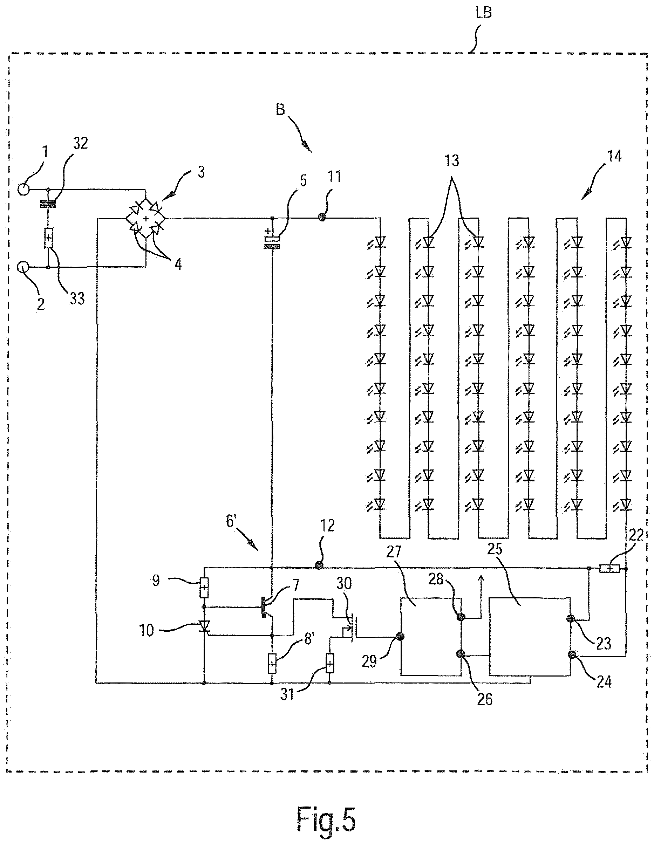

Bei dem etwas aufwändiger gestalteten Ausführungsbeispiel der Beleuchtungsvorrichtung LB gemäß **Fig. 5** ist der LED-Strom zusätzlich stabilisiert, und zwar durch eine unmittelbare LED-Strom-Regelung. Diese Ausführung verfügt über eine Schaltungsanordnung B, die sich von der in Fig. 1 dargestellten Schaltungsanordnung A im Wesentlichen darin unterscheidet, dass der Stromregler ein um eine zusätzliche Regelschleife ergänztes Regelglied 6'enthält. Dazu wird die Spannung über einem in den LED-Zweig hinter die Kette 14 eingefügten Widerstand 22 (dritter Widerstand) der Größe 1Ω abgegriffen und auf die Eingänge 23, 24 eines Funktionsblocks 25 geführt. Dieser Block erfasst den LED-Strom, unterdrückt per Filterung die Stromwelligkeit und gibt ein dem gemittelten Strom entsprechendes Signal als Ist-Wert an einen ersten Eingang 26 eines PI-Reglers 27, der aus einer von einer Spannungsquelle gelieferten, auf einen weiteren Eingang 28 gegebenen Referenzspannung den Soll-Wert bildet. Das durch einen Soll-IstVergleich gebildete Differenzsignal wird auf das Gate eines MOSFETs 30 geleitet. Der MOSFET liegt in Reihe zu einem sourceseitigen niederohmigen Widerstand 31 (vierter Widerstand). Der erste Widerstand 8' und der vierte Widerstand 31 sind im vorliegenden Fall gleich groß, nämlich 20 Ω; das ist der doppelte Wert des ersten Widerstandes 8 im ersten Ausführungsbeispiel. Der Widerstand Rds(on)des MOSFETs im leitenden Zustand - er wird vorwiegend im Kleinsignalbereich betrieben - liegt bei unter 1 Ω. Damit hat das aus den Elementen 8', 30 und 31 gebildete Widerstandsnetzwerk einen für die Regelung ausreichenden Wertebereich.

Außerdem liegt im Eingangskreis des Gleichrichters 3 ein Kondensator 32 von etwa 100nF in Serie mit einem fünften, etwa 100 Ω großen Widerstand 33. Dieses R-C-Glied dient zur Kompensation von entstehenden Blindleistungen.

Im Betrieb wird der LED-Strom über den aus den Bauelementen 8', 30 und 31 gebildeten, variablen Gesamtwiderstand und damit - bei vorgegebener Zündspannung des Thyristors 10 - über die Höhe des Schwellenstroms auf den Nennstrom hin eingeregelt.

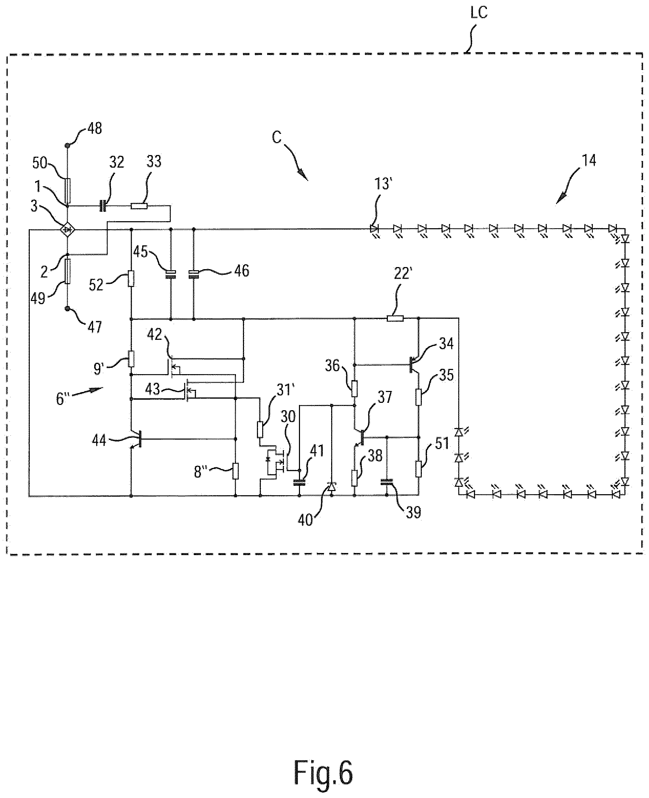

**Fig.6** zeigt von einer Beleuchtungsvorrichtung LC gemäß einem dritten Ausführungsbeispiel die konkrete Schaltungsanordnung C. Diese Schaltungsanordnung C hat - mit einer Kette aus 32 LED-Einheiten 13' mit Vorwärtsspannungen um 8,8 V - einen Wirkungsgrad ≥ 87%. Zusätzlich ist der LED-Strom stabilisiert, und zwar wiederum per direkter LED-Strom-Messung in einem erweiterten Regelglied 6".

Für diese direkte Regelung wird der LED-Strom an einem dritten Widerstand 22' abgenommen, der hier einen Wert von 8 Ω hat. Das LED-Ketten-seitige (erste) Ende des dritten Widerstandes 22' ist über die Emitter-Kollektor-Strecke eines pnp-Transistors 34 in Reihe mit einem sechsten Widerstand 35 (22 KΩ) und einem siebten Widerstand 51 (10 KΩ) mit dem negativen Ausgang des Gleichrichters 3 verbunden. Das zweite Ende des dritten Widerstandes 22' ist über einen achten Widerstand 36 (100 KΩ), die Kollektor-Emitter-Strecke eines npn-Transistors 37 und einen neunten Widerstand 38 (2 KΩ) ebenfalls auf den negativen Ausgang des Gleichrichters 3 geführt. Die Basis des Transistors 34 ist mit dem zweiten Ende des Widerstands 22' verbunden, während die Basis des Transistors 37 zwischen die Widerstände 35 und 51 geführt ist. Überdies liegt zwischen der Basis des Transistors 37 und dem negativen Ausgang des Gleichrichters 3 noch ein Kondensator 39 (10 µF). Zur aus der Kollektor-Emitter-Strecke des Transistors 37 und dem Widerstand 38 gebildeten Kette liegen eine Zener-Diode 40 sowie ein Kondensator 41 (2 nF) parallel.

Das Gate des MOSFETs 30 liegt an der Seite des Kondensators 41, die dem negativen Ausgang des Gleichrichters 3 abgewandt ist. Die Source-Drain-Strecke dieses Transistors liegt in Reihe zu einem 3 Ω großen Widerstand 31', und diese Reihe liegt wiederum parallel zum ersten Widerstand 8", der im vorliegenden Fall einen Wert von nur 5 Ω hat. Der Schalter im ersten Stromregler-Zweig besteht diesmal aus thermischen Gründen aus zwei MOSFETs 42, 43, die zueinander parallel liegen. Diese MOSFETs müssen übrigens nicht nebeneinander geschaltet sein; so könnte etwa das Gate des MOSFETs 43 auch über einen eigenen Widerstand auf den negativen Ausgang des Gleichrichters 3 geführt werden. Die Gates beider MOSFETs 42, 43 liegen zwischen dem hochohmigen Widerstand 9' (47 KΩ) und der Kollektor-Emitter-Strecke des Schalters, im vorliegenden Fall ein pnp-Transistor 44. Die Basis dieses Transistors ist zwischen MOSFET 43 und den niederohmigen Widerstand 8'' geführt.

Aus Platzgründen ist der Ladekondensator aus zwei gleich großen, zueinander parallel liegenden Elkos 45, 46 zusammengesetzt. Parallel zu diesem zusammengesetzten Kondensator liegt ein sehr hochohmiger zehnter Widerstand 52 (1 MΩ), der dafür sorgt, dass die Elkos nach einer Abschaltung sanft entladen werden.

Zwischen den Eingängen 1 und 2 der Schaltungsanordnung C und den eigentlichen Anschlüssen der Platine (Pads 47, 48) liegen, wie der Fig.6 zu entnehmen, jeweils noch SMD-Sicherungen 49, 50.

Im Betrieb der Schaltungsanordnung C wird eine dem LED-Strom entsprechende Spannung über dem Widerstand 22' abgenommen, durch die Bauelemente 35, 51 und 39 geglättet und durch die Bauelemente 36, 37 und 38 invertiert (und darüber hinaus auch geregelt). Die Zener-Diode 40 sorgt dafür, dass in der Einschaltphase Spannungsspitzen abgeschnitten werden. Kondensator 41 hilft, dass die Gatespannung des MOSFETs 30 zwischen 0,7 und 3 V pendelt.

Messungen zeigen, dass die Energieaufnahme der Vorrichtung selbst bei relativ großen Schwankungen der Eingangswechselspannung, etwa im Bereich 230 +/- 30 V, nahezu konstant bleibt (Leistungsfaktoren von 0,8, 0,84 und 0,89 bei Eingangsspannungen von 200, 230 bzw. 255 V).

Die vorliegende Erfindung ist selbstverständlich nicht auf die dargestellten Ausführungsbeispiele beschränkt.

Wenn es in erster Linie nur darauf ankommt, dass der Kondensator kontrolliert geladen und direkt über die LED-Kette wieder entladen wird, ist der Gestaltungsspielraum besonders groß. So könnte der Stromregler der Schaltungsanordnung, auch wenn er in Form einer Parallelschaltung zweier alternierend leitend geschalteter Zweige bestechend einfach und elegant ausgeführt ist, auch auf andere Weise realisiert werden. Gleiche Funktionen, also das Erfassen von Regelgrößen, das Abschalten beim Erreichen eines definierten Lade-/LED-Stromwertes oder die erneute Aktivierung der Stromquelle beim anschließenden Passieren des Schwellenspannungswertes, ließen sich in an sich bekannter Weise auch mit einer etwas komplexeren Schaltung, bei der etwa ein Mikrocontroller den Strom detektiert, nachbilden. Abgesehen davon könnten die Leuchtdioden auch bei anderen Frequenzen als im sichtbaren Spektrum, etwa im IR- oder UV-Bereich emittieren, als OLEDs ausgeführt sein oder etwa zu Arrays aus parallelgeschalteten Ketten erweitert werden.

### Bezugszeichenliste

- 1: erster Eingangsanschluss
- 2: zweiter Eingangsanschluss
- 3: Gleichrichter
- 4: Gleichrichter-Dioden
- 5: Speicherkondensator
- 6, 6', 6": Regelglied im ersten, zweiten bzw. dritten Ausführungsbeispiel
- 7: Bipolartransistor
- 8, 8', 8'': erster Widerstand im ersten, zweiten bzw. dritten Ausführungsbeispiel
- 9, 9': zweiter Widerstand im ersten bzw. dritten Ausführungsbeispiel
- 10: Thyristor
- 11: erster Ausgangsanschluss
- 12: zweiter Ausgangsanschluss
- 13, 13': Leuchtdiode im ersten bzw. dritten Ausführungsbeispiel
- 14: LED-Kette
- 15: zeitlicher Verlauf der Spannung an der LED-Kette, nach dem Einschalten
- 16: zeitlicher Verlauf des Stromes in der LED-Kette, nach dem Einschalten
- 17: zeitlicher Verlauf der von der LED-Kette aufgenommenen Leistung, nach dem Einschalten
- 18: zeitlicher Verlauf der Reglerverluste, nach dem Einschalten
- 19: zeitlicher Verlauf der Gesamtleistungsaufnahme, nach dem Einschalten
- 20: Strom in der LED-Kette als Funktion der Netzspannung, für eine unterschiedliche Anzahl an LEDs
- 21: Wirkungsgrad als Funktion der Netzspannung, ebenfalls für eine unterschiedliche Anzahl an LEDs
- 22, 22': dritter Widerstand im zweiten bzw. dritten Ausführungsbeispiel
- 23: erster Eingang des Funktionsblocks 25
- 24: zweiter Eingang des Funktionsblocks 25
- 25: Funktionsblock zur Erfassung und Filterung des Stroms in der LED-Kette
- 26: erster Eingang der Regelstufe 27
- 27: Regelsufe zur Erzeugung des Stellsignals
- 28: zweiter Eingang der Regelstufe
- 29: Ausgang der Regelstufe
- 30: MOSFET
- 31, 31': vierter Widerstand im zweiten bzw. dritten Ausführungsbeispiel
- 32: Kondensator
- 33: fünfter Widerstand
- 34: pnp-Transistor
- 35: sechster Widerstand
- 36: achter Widerstand
- 37: npn-Transistor
- 38: neunter Widerstand
- 39: Kondensator
- 40: Zener-Diode
- 41: Kondensator
- 42: MOSFET
- 43: MOSFET
- 44: pnp-Transistor
- 45: Elko
- 46: Elko
- 47: Pad
- 48: Pad
- 49: SMD-Sicherung
- 50: SMD-Sicherung
- 51: siebter Widerstand
- 52: zehnter Widerstand
- A: Schaltungsanordnung des ersten Ausführungsbeispiels
- B: Schaltungsanordnung des zweiten Ausführungsbeispiels
- C: Schaltungsanordnung des dritten Ausführungsbeispiels
- LA: Beleuchtungsvorrichtung mit Schaltungsanordnung A
- LB: Beleuchtungsvorrichtung mit Schaltungsanordnung B
- LC: Beleuchtungsvorrichtung mit Schaltungsanordnung C

## Patentansprüche

1. Schaltungsanordnung (A, B, C) zum Betrieb einer aus mindestens einer Leuchtdiode (13, 13') bestehenden Kette (14) an einer Wechselspannung, insbesondere Netzspannung, aufweisend
- einen Gleichrichter (3) mit einem dem Gleichrichter vorgeschalteten Eingangskreis (1, 2) zur Aufnahme der Wechselspannung und einem dem Gleichrichter nachgeschalteten Ausgangskreis (5-12; 5, 6', 7, 8', 9-12; 45, 46, 6'', 8", 9, 42, 43), in den eine gleichgerichtete Wechselspannung abgegeben wird,
**dadurch gekennzeichnet, dass** die Schaltungsanordnung (A, B, C) weiterhin aufweist:
- einen im Ausgangskreis (5-12; 5, 6', 7, 8', 9-12; 45, 46, 6'', 8", 9, 42, 43) liegenden Energiespeicher, insbesondere Speicherkondensator (5; 45, 46), an den die LED-Kette (14) in einer Parallelschaltung anschließbar ist und
- einen Stromregler (6, 6', 6"), der ein Regelglied (6, 6', 6'') ist, das im Ausgangskreis (5-12; 5, 6', 7, 8', 9-12; 45, 46, 6'', 8", 9, 42, 43) seriell zu der aus Speicherkondensator (5; 45, 46) und LED-Kette (14) gebildeten Parallelschaltung liegt, wobei er im Betrieb die Aufladung des Speicherkondensators (5; 45, 46) jedes Mal unterbricht, wenn ein Strom im Ausgangskreis (5-12; 5, 6', 7, 8', 9-12; 45, 46, 6'', 8", 9, 42, 43) auf einen bestimmten Schwellenstrom angestiegen ist, und wieder zulässt, wenn die gleichgerichtete Wechselspannung im Ausgangskreis (5-12; 5, 6', 7, 8', 9-12; 45, 46, 6", 8", 9, 42, 43) anschließend auf eine bestimmte Schwellenspannung, insbesondere 0V, gefallen ist.

2. Schaltungsanordnung (A, B, C) nach Anspruch 1, wobei die LED-Kette (14) eine Vorwärtsspannung aufweist, für die gilt 0,5 Vcc < Ufges < 0,9 Vcc, insbesondere 0,6 Vcc < Ufges < 0,8 Vcc und insbesondere 0,65 Vcc < Ufges < 0,75 Vcc, wobei Vcc der Spitzenwert der aufgenommenen Wechselspannung ist, und Ufges die Nennspannung der LED-Kette (14) ist.

3. Schaltungsanordnung (A, B, C) nach einem der vorhergehenden Ansprüche, wobei gilt 1,5 Iled < Ipeak < 4 Iled, insbesondere 2 Iled < Ipeak < 3 Iled, mit Iled = Nennstrom der einzelnen LEDs (13, 13') und Ipeak = Schwellenstrom.

4. Schaltungsanordnung (A, B, C) nach einem der vorhergehenden Ansprüche, wobei der Stromregler (6, 6', 6") während der Aufladung des Speicherkondensators (5; 45, 46) beim Erreichen des Schwellenstroms von einem niederohmigen Zustand in einen hochohmigen Zustand übergeht und dann, wenn die Spannung im Ausgangskreis (5-12; 5, 6', 7, 8', 9-12; 45, 46, 6", 8'', 9, 42, 43) auf die Schwellenspannung gefallen ist, vom hochohmigem Zustand wieder in den niederohmigen Zustand zurückkehrt.

5. Schaltungsanordnung (A, B, C) nach Anspruch 4, wobei das Regelglied (6, 6', 6") zwei im Ausgangskreis (5-12; 5, 6', 7, 8', 9-12; 45, 46, 6'', 8'', 9, 42, 43) zueinander parallel liegende Zweige (7-10; 7, 8', 9, 10; 42, 43, 8", 9', 44) enthält, von denen ein erster Zweig (7, 8; 7, 8'; 42, 43, 8") im niederohmigen Zustand leitet und im hochohmigen Zustand gesperrt ist und ein zweiter Zweig (9, 10; 9', 44) im niederohmigen Zustand gesperrt ist und im hochohmigen Zustand leitet.

6. Schaltungsanordnung (A, B, C) nach Anspruch 5, wobei der erste Zweig (7, 8; 7, 8'; 42, 43, 8") einen ersten Schalter (7; 42, 43) in Serie zu einem niederohmigen Widerstand (8; 8'; 8'') und der zweite Zweig (9, 10; 9' 44) einen hochohmigen Widerstand (9; 9') in Reihe mit einem zweiten Schalter (10; 44) enthält.

7. Schaltungsanordnung (A, B, C) nach einem der Ansprüche 4 bis 6, wobei im hochohmigen Zustand des Regelgliedes (6, 6', 6") im Ausgangskreis (5-12; 5, 6', 7, 8', 9-12; 45, 46, 6", 8", 9, 42, 43) ein Strom von höchstens 10%, insbesondere höchstens 5% und besonders bevorzugt höchstens 2%, des Nennstroms der LED-Kette (14) fließt.

8. Schaltungsanordnung (A, B, C) nach einem der vorhergehenden Ansprüche, wobei der Speicherkondensator (5; 45, 46), insbesondere Elektrolytkondensator, eine Kapazität zwischen 100 *µ*F und 1000 µF pro Ampere des Nennstroms der LED-Kette (14) aufweist.

9. Schaltungsanordnung (B, C) nach einem der vorhergehenden Ansprüche, die zum Dimmen eine Phasenanschnitt-Steuereinheit (32, 33) enthält und in deren Eingangskreis ein R-C-Glied eingesetzt ist.

10. Schaltungsanordnung (B, C) nach einem der vorhergehenden Ansprüche, wobei der Stromregler (6', 6") eine zusätzliche Regelschleife enthält, die den durch die LED-Kette (14) fließenden Strom (LED-Strom) durch Erfassung der gemittelten Wechselspannung im Eingangskreis (1, 2) des Gleichrichters (3) regelt.

11. Beleuchtungsvorrichtung (LB; LC) mit einer Schaltungsanordnung (B, C) nach Anspruch 10 und einer an die Schaltungsanordnung angeschlossenen LED-Kette (14), wobei der Stromregler (6', 6") eine zusätzliche Regelschleife enthält, die den durch die LED-Kette (14) fließenden Strom (LED-Strom) durch Erfassung des LED-Stroms regelt.

12. Beleuchtungsvorrichtung (LB; LC) nach Anspruch 11, mit Mitteln, die den LED-Strom erfassen und filtern, den durch Filterung gewonnenen Mittelwert einem Soll-IstVergleich unterziehen und mit dem durch den Vergleich erhaltenen Differenzsignal die Höhe des Schwellenstromes auf den LED-Nennstrom hin regeln.

13. Beleuchtungsvorrichtung (LB; LC) nach Anspruch 11 oder 12, mit Mitteln zur Reduzierung des Soll-Wertes in Abhängigkeit von der Betriebstemperatur.

14. Beleuchtungsvorrichtung (LA; LB; LC) mit einer Schaltungsanordnung (A, B, C) nach einem der Ansprüche 1 bis 10, wobei die Schaltungsanordnung (A, B, C) zusammen mit der LED-Kette (14) auf einer Platine, insbesondere auf einer der beiden Seiten der Platine, untergebracht ist.

15. Verfahren zum Betrieb einer aus mindestens einer Leuchtdiode (13, 13') bestehenden Kette (14) an einer Wechselspannung, insbesondere Netzspannung, aufweisend eine Schaltungsanordnung mit:
- einen Gleichrichter (3) mit einem dem Gleichrichter vorgeschalteten Eingangskreis (1, 2) zur Aufnahme der Wechselspannung und einem dem Gleichrichter nachgeschalteten Ausgangskreis (5-12; 5, 6', 7, 8', 9-12; 45, 46, 6'', 8", 9, 42, 43), in den eine gleichgerichtete Wechselspannung abgegeben wird,
- einen im Ausgangskreis (5-12; 5, 6', 7, 8', 9-12; 45, 46, 6", 8", 9, 42, 43) liegenden Energiespeicher, insbesondere Speicherkondensator (5; 45, 46), an den die LED-Kette (14) in einer Parallelschaltung anschließbar ist und
- einen Stromregler (6, 6', 6"), der ein Regelglied (6, 6', 6") ist, das im Ausgangskreis (5-12; 5, 6', 7, 8', 9-12; 45, 46, 6'', 8", 9, 42, 43) seriell zu der aus Speicherkondensator (5; 45, 46) und LED-Kette (14) gebildeten Parallelschaltung liegt, **gekennzeichnet durch** folgende Schritte:
- im Betrieb wird die Aufladung des Speicherkondensators (5; 45, 46) jedes Mal unterbrochen, wenn der Strom im Ausgangskreis (5-12; 5, 6', 7, 8', 9-12; 45, 46, 6'', 8'', 9, 42, 43) auf einen bestimmten Schwellenstrom angestiegen ist, und wieder zugelassen, wenn die Spannung im Ausgangskreis (5-12; 5, 6', 7, 8', 9-12; 45, 46, 6", 8", 9, 42, 43) anschließend auf eine bestimmte Schwellenspannung, insbesondere 0V, gefallen ist
- im stationären Betrieb fließt während der Ladephase Strom sowohl in den Energiespeicher (5; 45, 46) als auch durch die LED-Kette (14) und
- in der Entladephase wird die Ladung des Energiespeichers (5; 45, 46) in die LED-Kette (14) geleitet.

## Claims

1. Circuit arrangement (A, B, C) for operating a chain (14) comprising at least one light-emitting diode (13, 13') on an AC voltage, in particular mains voltage, comprising
- a rectifier (3) with an input circuit (1, 2) connected upstream of the rectifier for drawing the AC voltage and an output circuit (5-12; 5, 6', 7, 8', 9-12; 45, 46, 6", 8'', 9, 42, 43) connected downstream of the rectifier, into which a rectified AC voltage is output,
**characterized in that** the circuit arrangement (A, B, C) further comprises:
- an energy store provided in the output circuit (5-12; 5, 6', 7, 8', 9-12; 45, 46, 6", 8", 9, 42, 43), in particular storage capacitor (5; 45, 46), to which the LED chain (14) can be connected in a parallel circuit, and
- a current controller (6, 6', 6"), which is a control element (6, 6', 6"), which is connected in series, in the output circuit (5-12; 5, 6', 7, 8', 9-12; 45, 46, 6", 8", 9, 42, 43), with the parallel circuit formed from the storage capacitor (5; 45, 46) and the LED chain (14), wherein during operation, it interrupts the charging of the storage capacitor (5; 45, 46) each time a current in the output circuit (5-12; 5, 6', 7, 8', 9-12; 45, 46, 6", 8", 9, 42, 43) has risen to a specific threshold current and enables charging again when the rectified AC voltage in the output circuit (5-12; 5, 6', 7, 8', 9-12; 45, 46, 6'', 8'', 9, 42, 43) has then fallen to a specific threshold voltage, in particular 0 V.

2. Circuit arrangement (A, B, C) according to Claim 1, wherein the LED chain (14) has a forward voltage, for which 0.5 Vcc < Ufges < 0.9 Vcc, in particular 0.6 Vcc < Ufges < 0.8 Vcc and in particular 0.65 Vcc < Ufges < 0.75 Vcc, holds true, wherein Vcc is the peak value of the drawn AC voltage, and Ufges is the rated voltage of the LED chain (14).

3. Circuit arrangement (A, B, C) according to one of the preceding claims, wherein 1.5 Iled < Ipeak < 4 Iled, in particular 2 Iled < Ipeak < 3 Iled, where Iled = rated current of the individual LEDs (13, 13') and Ipeak = threshold current.

4. Circuit arrangement (A, B, C) according to one of the preceding claims, wherein the current controller (6, 6', 6''), during charging of the storage capacitor (5; 45, 46), transfers from a low-resistance state to a high-resistance state when the threshold current is reached and, when the voltage in the output circuit (5-12; 5, 6', 7, 8', 9-12; 45, 46, 6", 8", 9, 42, 43) has fallen to the threshold voltage, returns from the high-resistance state to the low-resistance state again.

5. Circuit arrangement (A, B, C) according to Claim 4, wherein the control element (6, 6', 6'') contains two branches (7-10; 7, 8', 9, 10; 42, 43, 8'', 9', 44) which are in parallel with one another in the output circuit (5-12; 5, 6', 7, 8', 9-12; 45, 46, 6", 8'', 9, 42, 43), of which branches a first branch (7, 8; 7, 8', 42, 43, 8") is conducting in the low-resistance state and is off in the high-resistance state, and a second branch (9, 10; 9', 44) is off in the low-resistance state and is conducting in the high-resistance state.

6. Circuit arrangement (A, B, C) according to Claim 5, wherein the first branch (7, 8; 7, 8'; 42, 43, 8") contains a first switch (7; 42, 43) in series with a low-resistance resistor (8; 8'; 8"), and the second branch (9, 10; 9', 44) contains a high-resistance resistor (9; 9') in series with a second switch (10; 44).

7. Circuit arrangement (A, B, C) according to one of Claims 4 to 6, wherein, in the high-resistance state of the control element (6, 6', 6"), a current of at most 10%, in particular at most 5% and particularly preferably at most 2%, of the rated current of the LED chain (14) flows in the output circuit (5-12; 5, 6', 7, 8', 9-12; 45, 46, 6", 8", 9, 42, 43) .

8. Circuit arrangement (A, B, C) according to one of the preceding claims, wherein the storage capacitor (5; 45, 46), in particular an electrolytic capacitor, has a capacitance of between 100 µF and 1000 µF per ampere of the rated current of the LED chain (14).

9. Circuit arrangement (B, C) according to one of the preceding claims, which contains a phase-gating control unit (32, 33) for dimming purposes and an RC element is inserted into the input circuit of said phase-gating control unit.

10. Circuit arrangement (B, C) according to one of the preceding claims, wherein the current controller (6', 6'') contains an additional control loop used for the closed-loop control of the current flowing through the LED chain (14) (LED current) by detection of the averaged AC voltage in the input circuit (1, 2) of the rectifier (3).

11. Lighting apparatus (LB; LC) comprising a circuit arrangement (B, C) according to Claim 10 and an LED chain (14) connected to the circuit arrangement, wherein the current controller (6', 6'') contains an additional control loop which is used for closed-loop control of the current flowing through the LED chain (14) (LED current) by detection of the LED current.

12. Lighting apparatus (LB; LC) according to Claim 11, comprising means which detect and filter the LED current, subject the mean value obtained by filtering to a setpoint/actual value comparison and, using the difference signal obtained by the comparison, adjust the level of the threshold current to the LED rated current.

13. Lighting apparatus (LB; LC) according to Claim 11 or 12, comprising means for reducing the setpoint value depending on the operating temperature.

14. Lighting apparatus (LA; LB; LC) comprising a circuit arrangement (A, B, C) according to one of Claims 1 to 10, wherein the circuit arrangement (A, B, C), together with the LED chain (14), is accommodated on a printed circuit board, in particular on one of the two sides of the printed circuit board.

15. Method for operating a chain (14) comprising at least one light-emitting diode (13, 13') on an AC voltage, in particular mains voltage, comprising a circuit arrangement having:
- a rectifier (3) with an input circuit (1, 2) connected upstream of the rectifier for drawing the AC voltage and an output circuit (5-12; 5, 6', 7, 8', 9-12; 45, 46, 6", 8'', 9, 42, 43) connected downstream of the rectifier, into which a rectified AC voltage is output,
- an energy store provided in the output circuit (5-12; 5, 6', 7, 8', 9-12; 45, 46, 6", 8", 9, 42, 43), in particular storage capacitor (5; 45, 46), to which the LED chain (14) can be connected in a parallel circuit, and
- a current controller (6, 6', 6"), which is a control element (6, 6', 6"), which is connected in series, in the output circuit (5-12; 5, 6', 7, 8', 9-12; 45, 46, 6", 8", 9, 42, 43) with the parallel circuit formed from the storage capacitor (5; 45, 46) and the LED chain (14), **characterized by** the following steps:
- during operation, the charging of the storage capacitor (5; 45, 46) is interrupted each time the current in the output circuit (5-12; 5, 6', 7, 8', 9-12; 45, 46, 6'', 8", 9, 42, 43) has risen to a specific threshold current and is enabled again when the voltage in the output circuit (5-12; 5, 6', 7, 8', 9-12; 45, 46, 6'', 8'', 9, 42, 43) has then fallen to a specific threshold voltage, in particular 0V,
- during steady-state operation, current flows both through the energy store (5; 45, 46) and through the LED chain (14) during the charge phase, and
- in the discharge phase, the charge of the energy store (5; 45, 46) is conducted into the LED chain (14).

## Revendications

1. Circuit (A, B, C) pour faire fonctionner une chaîne (14) composée d'au moins une diode électroluminescente (13, 13') alimentée par une tension alternative, et plus particulièrement une tension secteur, comportant :
- un redresseur (3) avec un circuit d'entrée (1, 2) monté en amont du redresseur pour recevoir la tension alternative et un circuit de sortie (5-12 ; 5, 6', 7, 8', 9-12 ; 45, 46, 6", 8", 9, 42, 43) monté en aval du redresseur et auquel est appliquée une tension alternative redressée,
**caractérisé en ce que** le circuit (A, B, C) comporte en outre :
- un accumulateur d'énergie, et plus particulièrement un condensateur accumulateur (5 ; 45, 46), situé dans le circuit de sortie (5-12 ; 5, 6', 7, 8', 9-12 ; 45, 46, 6", 8", 9, 42, 43) et auquel la chaîne de DEL (14) peut être raccordée dans un montage en parallèle et
- un régulateur de courant (6, 6', 6") qui est un organe de réglage (6, 6', 6") qui se trouve dans le circuit de sortie (5-12 ; 5, 6', 7, 8', 9-12 ; 45, 46, 6", 8'', 9, 42, 43) en série avec le montage en parallèle composé du condensateur accumulateur (5 ; 45, 46) et de la chaîne de DEL (14), ledit régulateur interrompant, pendant le fonctionnement, le chargement du condensateur accumulateur (5 ; 45, 46) chaque fois qu'un courant a augmenté pour atteindre un courant seuil déterminé dans le circuit de sortie (5-12 ; 5, 6', 7, 8', 9-12 ; 45, 46, 6", 8", 9, 42, 43) et l'autorisant de nouveau lorsque la tension alternative redressée retombe ensuite, dans le circuit de sortie (5-12 ; 5, 6', 7, 8', 9-12 ; 45, 46, 6", 8", 9, 42, 43), à une tension seuil déterminée, en particulier 0V.

2. Circuit (A, B, C) selon la revendication 1, la chaîne de DEL (14) présentant une tension directe pour laquelle 0,5 Vcc < Ufges < 0,9 Vcc, et plus particulièrement 0,6 Vcc < Ufges < 0,8 Vcc, et plus particulièrement 0,65 Vcc < Ufges < 0,75 Vcc, Vcc étant la valeur de pointe de la tension alternative reçue et Ufges étant la tension nominale de la chaîne de DEL (14).

3. Circuit (A, B, C) selon l'une des revendications précédentes, avec 1,5 Iled < Ipeak < 4 Iled, et plus particulièrement 2 Iled < Ipeak < 3 Iled, avec Iled = courant nominal des différentes DEL (13, 13') et Ipeak = courant seuil.

4. Circuit (A, B, C) selon l'une des revendications précédentes, le régulateur de courant (6, 6', 6") passant, pendant le chargement du condensateur accumulateur (5 ; 45, 46), à l'obtention du courant seuil, d'un état à basse impédance à un état à haute impédance et repassant de l'état à haute impédance à l'état à basse impédance lorsque la tension dans le circuit de sortie (5-12 ; 5, 6', 7, 8', 9-12 ; 45, 46, 6", 8", 9, 42, 43) est retombée à la tension seuil.

5. Circuit (A, B, C) selon la revendication 4, l'organe de réglage (6, 6', 6") contenant deux branches (7-10 ; 7, 8', 9, 10 ; 42, 43, 8", 9', 44) parallèles entre elles dans le circuit de sortie (5-12 ; 5, 6', 7, 8', 9-12 ; 45, 46, 6" , 8" , 9, 42, 43), une première branche (7, 8 ; 7, 8' ; 42, 43, 8") étant conductrice à l'état à basse impédance et bloquée à l'état à haute impédance et une deuxième branche (9, 10 ; 9', 44) étant bloquée à l'état à basse impédance et conductrice à l'état à haute impédance.

6. Circuit (A, B, C) selon la revendication 5, la première branche (7, 8 ; 7, 8' ; 42, 43, 8") contenant un premier commutateur (7 ; 42, 43) en série avec une résistance à basse impédance (8 ; 8' ; 8'') et la deuxième branche (9, 10 ; 9', 44) contenant une résistance à haute impédance (9 ; 9') en série avec un deuxième commutateur (10 ; 44).

7. Circuit (A, B, C) selon l'une des revendications 4 à 6, un courant de 10% au maximum, en particulier de 5% au maximum et de manière particulièrement préférentielle de 2% au maximum du courant nominal de la chaîne de DEL (14) traversant le circuit de sortie (5-12 ; 5, 6', 7, 8', 9-12 ; 45, 46, 6" , 8" , 9, 42, 43) à l'état à haute impédance de l'organe de réglage (6, 6', 6").

8. Circuit (A, B, C) selon l'une des revendications précédentes, le condensateur accumulateur (5 ; 45, 46), en particulier un condensateur électrolytique, présentant une capacité comprise entre 100 µF et 1000 µF par ampère du courant nominal de la chaîne de DEL (14).

9. Circuit (B, C) selon l'une des revendications précédentes, lequel contient une unité de commande de découpage de phase (32, 33) pour varier l'intensité de la lumière et dans le circuit d'entrée duquel est placé un organe RC.

10. Circuit (B, C) selon l'une des revendications précédentes, le régulateur de courant (6', 6") contenant une boucle de réglage supplémentaire qui règle le courant passant par la chaîne de DEL (14) (courant de DEL) par détection de la tension alternative moyenne dans le circuit d'entrée (1, 2) du redresseur (3).

11. Dispositif d'éclairage (LB ; LC) comportant un circuit (B, C) selon la revendication 10 et une chaîne de DEL (14) raccordée au circuit, le régulateur de courant (6', 6'') contenant une boucle de réglage supplémentaire qui règle le courant passant par la chaîne de DEL (14) (courant de DEL) par détection du courant de DEL.

12. Dispositif d'éclairage (LB ; LC) selon la revendication 11, comportant des moyens de détection et de filtrage du courant de DEL qui soumettent la valeur moyenne obtenue par filtration à une comparaison entre valeur de consigne et valeur réelle et qui règlent la hauteur du courant seuil sur le courant nominal de DEL par le signal différentiel résultant de la comparaison.

13. Dispositif d'éclairage (LB ; LC) selon la revendication 11 ou 12, comportant des moyens de réduction de la valeur de consigne en fonction de la température de service.

14. Dispositif d'éclairage (LA ; LB ; LC) comportant un circuit (A, B, C) selon l'une des revendications 1 à 10, le circuit (A, B, C) étant logé avec la chaîne de DEL (14) sur une carte de circuit imprimé, et plus particulièrement sur l'un des deux côtés de la carte de circuit imprimé.

15. Procédé pour faire fonctionner une chaîne (14) composée d'au moins une diode électroluminescente (13, 13') alimentée par une tension alternative, et plus particulièrement une tension secteur, comportant un circuit avec :
- un redresseur (3) avec un circuit d'entrée (1, 2) monté en amont du redresseur pour recevoir la tension alternative et un circuit de sortie (5-12 ; 5, 6', 7, 8', 9-12 ; 45, 46, 6", 8", 9, 42, 43) monté en aval du redresseur et auquel est appliquée une tension alternative redressée,
- un accumulateur d'énergie, et plus particulièrement un condensateur accumulateur (5 ; 45, 46), situé dans le circuit de sortie (5-12 ; 5, 6', 7, 8', 9-12 ; 45, 46, 6", 8", 9, 42, 43) et auquel la chaîne de DEL (14) peut être raccordée dans un montage en parallèle et
- un régulateur de courant (6, 6', 6") qui est un organe de réglage (6, 6', 6") qui se trouve dans le circuit de sortie (5-12 ; 5, 6', 7, 8', 9-12 ; 45, 46, 6", 8", 9, 42, 43) en série avec le montage en parallèle composé du condensateur accumulateur (5 ; 45, 46) et de la chaîne de DEL (14), **caractérisé par** les étapes suivantes :
- pendant le fonctionnement, interruption du chargement du condensateur accumulateur (5 ; 45, 46) chaque fois que le courant a augmenté pour atteindre un courant seuil déterminé dans le circuit de sortie (5-12 ; 5, 6', 7, 8', 9-12 ; 45, 46, 6", 8", 9, 42, 43) et réautorisation lorsque la tension retombe ensuite, dans le circuit de sortie (5-12 ; 5, 6', 7, 8', 9-12 ; 45, 46, 6", 8", 9, 42, 43), à une tension seuil déterminée, en particulier 0V,
- en fonctionnement stationnaire, du courant passe, pendant la phase de chargement, non seulement par l'accumulateur d'énergie (5 ; 45, 46), mais aussi par la chaîne de DEL (14) et
- dans la phase de déchargement, la charge de l'accumulateur d'énergie (5 ; 45, 46) est introduite dans la chaîne de DEL (14).
